# EUROPÄISCHE PATENTSCHRIFT

(11) **EP 2 876 341 B1**
(45) Veröffentlichungstag und Bekanntmachung des Hinweises auf die Patenterteilung: **21.10.2015**
(21) Anmeldenummer: 13005463.8
(22) Anmeldetag: 21.11.2013
(51) Int. Cl.: F16K 51/02, F16K 11/18, F16K 3/02

(54) **Verfahren zum Betrieb eines Ventils**
Method for operating a valve
Procédé de fonctionnement d'une soupape

(43) Veröffentlichungstag der Anmeldung: 27.05.2015
(73) Patentinhaber: VAT Holding AG, 9469 Haag (CH)
(72) Erfinder: Bachmann, Christoph, 9466 Sennwald (CH); Ehrne, Florian, 9467 Frümsen (CH)
(74) Vertreter: Fechner, Thomas

(56) Entgegenhaltungen:
- WO-A1-2010/115917
- US-A- 4 052 036

## Beschreibung

Die vorliegende Erfindung betrifft ein Verfahren zum Betrieb eines Ventils, insbesondere Vakuumventils, welches Öffnungen von zumindest zwei Kammern miteinander verbindet und zum Verschließen der Öffnungen jeder der Kammern zumindest ein eigenes Verschlussorgan aufweist, wobei die Verschlussorgane zum Verschließen der Öffnungen in einer Schließstellung in einem Ventilgehäuseinnenraum des Ventils von zumindest einem Längsantrieb des Ventils an, den Öffnungen jeweils zugeordnete, Ventilsitze angedrückt werden (vgl. WO-A-2010/115917).

Die bei gattungsgemäßen Verfahren eingesetzten Ventile der oben genannten Art sind zwischen zumindest zwei Kammern angeordnet, um Öffnungen in den Kammern verschließen zu können. Im geöffneten Zustand der Öffnungen können über das Ventil Werkstücke, Bauteile u. dgl. in das Innere der Kammern eingeführt oder zwischen den beiden Kammern überführt werden. Bei den Kammern kann es sich um Prozesskammern handeln, in denen Werkstücke, Bauteile o. dgl. einem Behandlungs-, Reinigungs- oder Herstellungsprozess o. dgl. unterzogen werden. Bei den Kammern kann es sich aber auch um sogenannte Transferkammern handeln, welche im Wesentlichen als Verbindung zwischen Prozesskammern oder als Vorkammern für Prozesskammern dienen. Ventile der oben genannten Art werden vor allem auch in der sogenannten Vakuumtechnik eingesetzt, bei der es darum geht, Werkstücke, Bauteile oder andere Gegenstände innerhalb einer Kammer in einer bestimmten Atmosphäre und/oder unter bestimmten Druckbedingungen einer speziellen Bearbeitung zu unterziehen. In den Ventilen wie auch in den Kammern kann es aufgrund der jeweiligen Gaszusammensetzung und/oder Bearbeitungsschritte durch gewisse Prozesse zur Ablagerung von Prozessrückständen und dergleichen kommen. Außerdem ist es meist turnusmäßig notwendig, die Ventile einer Wartung zu unterziehen.

Z. B. in Vorbereitung solcher Wartungs- oder Reinigungsvorgänge ist es häufig notwendig, zunächst einmal einen Druckausgleich zwischen zumindest einer der Kammern und dem Ventilgehäuseinnenraum durchzuführen.

Aus der KR 10-1171990 B1 ist es bekannt, einen solchen Druckausgleich über zusätzliche Bypassleitungen, welche zwischen den Kammern und dem Ventilgehäuseinnenraum verlegt sind, zu realisieren.

Aufgabe der Erfindung ist es, bei gattungsgemäßen Verfahren eine alternative Möglichkeit zur Durchführung eines Druckausgleichs zur Verfügung zu stellen.

Hierfür ist gemäß der Erfindung vorgesehen, dass zum Öffnen einer der Öffnungen in der dieser Öffnung zugeordneten Kammer ein Überdruck erzeugt wird, welcher höher als ein momentaner Druck im Ventilgehäuseinnenraum ist, wobei durch diesen Überdruck das dieser Öffnung zugeordnete Verschlussorgan vom dieser Öffnung zugeordneten Ventilsitz abgehoben wird und dann durch diese Öffnung hindurch ein Druckausgleich zwischen der dieser Öffnung zugeordneten Kammer und dem Ventilgehäuseinnenraum durchgeführt wird.

Im Gegensatz zu dem genannten Stand der Technik wird bei der Erfindung vorgeschlagen, den Druckausgleich nicht mehr über separate Bypassleitungen, sondern direkt über die Öffnung in der Kammer zu realisieren, indem in einer der Kammern ein Überdruck erzeugt wird, welcher so groß ist, dass das dieser Öffnung zugeordnete Verschlussorgan von dem dieser Öffnung zugeordneten Ventilsitz abgehoben wird. Durch die so geschaffene Überströmöffnung in Form der geöffneten Öffnung der Kammer hindurch kann dann der Druckausgleich erfolgen. Im Gegensatz zum oben genannten Stand der Technik sind somit bei der Erfindung keine Bypassleitungen mehr notwendig, da der Überdruck in der Kammer dazu verwendet wird, das Verschlussorgan aufzudrücken um dadurch den Druckausgleich zu ermöglichen.

Ventile, welche mit erfindungsgemäßen Verfahren betrieben werden können, können unterschiedliche Anzahlen von Öffnungen von unterschiedlichen Anzahlen von Kammern miteinander verbinden und haben jeweils eine entsprechende Anzahl von Verschlussorganen. Günstigerweise ist pro Kammer und pro Öffnung in der Kammer jeweils ein Verschlussorgan vorhanden. Das Ventil umfasst günstigerweise somit zum Verschließen der Öffnung in jeder der Kammern zumindest ein eigenes Verschlussorgan. In einer Minimalvariante ist das Ventil dazu ausgelegt eine Öffnung in einer Kammer mit einer anderen Öffnung in einer anderen Kammer zu verbinden. In diesem Fall weist das Ventil pro Öffnung ein eigenes Verschlussorgan, also zwei Verschlussorgane auf. Jedes Verschlussorgan dient dann dem Verschließen einer der Öffnungen. Da das Ventil in diesem Fall zwei Verschlussorgane aufweist, kann es in dieser Konfiguration auch als Twinvat bezeichnet werden.

Das erfindungsgemäße Verfahren kann aber auch zum Betrieb von Ventilen, welche anders konfiguriert sind, eingesetzt werden. So ist es z. B. denkbar, dass das Ventil mehr als zwei Kammern mit jeweils einer Öffnung miteinander verbindet und dann eben entsprechend der Anzahl der Öffnungen auch eine entsprechende Anzahl von Verschlussorganen aufweist. Darüber hinaus kann es natürlich auch sein, dass eine Kammer mehr als eine Öffnung aufweist, wobei dann pro Öffnung oder pro Kammer zumindest ein Verschlussorgan vorgesehen sein kann.

Die der jeweiligen Öffnung in der Kammer zugeordneten Ventilsitze können die jeweiligen Öffnungen in den Kammern direkt umgeben oder aber auch an Öffnungen in einem, den Ventilgehäuseinnenraum umschließenden, Ventilgehäuse des Ventils realisiert sein, wobei dann die Öffnungen im Ventilgehäuse im montierten Zustand in Deckung mit den jeweiligen Öffnungen der Kammern gebracht sind bzw. daran montiert sind. Bei den Öffnungen in den Kammern und gegebenenfalls auch im Ventilgehäuse handelt es sich günstigerweise um sogenannte Transferöffnungen zum Hindurchführen von zu bearbeitenden Bauteilen. Der Öffnungsquerschnitt dieser Öffnungen richtet sich dann grundsätzlich nach der Größe der durch sie hindurch zu befördernden Bauteile oder Werkstücke. Die Öffnungsquerschnittsflächen der Öffnungen können z. B. im Bereich von 90 cm² (Quadratzentimeter) bis 25000 cm², bevorzugt im Bereich von 3000 cm² bis 10000 cm² liegen. Hierfür geeignete Verschlussorgane können z. B. in Form von Ventilplatten ausgeführt sein. In der Schließstellung kommt es günstigerweise mittels der Verschlussorgane zu einer Abdichtung zwischen den Kammern bzw. deren Innenräumen und dem Ventilgehäuseinnenraum. Die hierfür gegebenenfalls notwendigen Dichtungen können sowohl an den Verschlussorganen als auch an den Ventilsitzen angeordnet sein. Je nach Anwendung und vorherrschenden Druckverhältnissen können beim Stand der Technik geeignete Dichtungen verwendet werden, ohne dass hier im Detail darauf noch einmal eingegangen werden muss. Die mit dem erfindungsgemäßen Verfahren betriebenen Ventile können auch als Verschlusseinrichtungen bezeichnet werden.

Wie bereits eingangs angedeutet, werden erfindungsgemäße Verfahren bevorzugt in der sogenannten Vakuumtechnik eingesetzt. Die Ventile können aufgrund ihres Einsatzes in der Vakuumtechnik auch als Vakuumventile bezeichnet werden. Von der Vakuumtechnik spricht man in der Regel dann, wenn Betriebszustände mit Drücken kleiner oder gleich 0,001 Millibar bzw. 0,1 Pascal zumindest zeitweise realisiert werden.

In bevorzugten Ausgestaltungsformen des erfindungsgemäßen Verfahrens ist vorgesehen, dass zum Abheben des dieser Öffnung zugeordneten Verschlussorgans vom diese Öffnung umgebenden Ventilsitz mit dem Überdruck Kräfte, welche vom Längsantrieb und vom momentanen Druck im Ventilgehäuseinnenraum auf das Verschlussorgan in Richtung hin zur Schließstellung ausgeübt werden, überwunden werden.

Insbesondere wenn es darum geht, in der Vakuumtechnik erfindungsgemäße Verfahren in Vorbereitung der Wartung, des Austausches und/oder der Reinigung von Vakuumventilen einzusetzen, ist es günstig, wenn vor dem Erzeugen des Überdrucks in der dieser Öffnung zugeordneten Kammer und im Ventilgehäuseinnenraum jeweils ein Druck herrscht, welcher kleiner als der Atmosphärendruck ist und zur Erzeugung des Überdrucks in der dieser Öffnung zugeordneten Kammer Atmosphärendruck aufgebaut wird. Unter dem Atmosphärendruck wird in diesem Fall der an der Erdoberfläche vorhandene Umgebungsdruck verstanden.

Insbesondere wenn die Gaszusammensetzung und die Druckverhältnisse in der anderen Kammer während und nach dem erfindungsgemäßen Öffnungsvorgang nicht beeinflusst werden sollen, ist günstigerweise vorgesehen, dass während des Öffnens der einen der Öffnungen das die zumindest eine andere Öffnung der zumindest einen anderen Kammer verschließende Verschlussorgan vom Längsantrieb und/oder vom sich im Ventilgehäuseinnenraum aufbauenden Druck an den der anderen Öffnung zugeordneten Ventilsitz angedrückt wird.

Damit die Verschlussorgane in einer maximalen Öffnungsstellung das Hindurchführen der zu bearbeitenden Gegenstände, Werkstücke o. dgl. möglichst wenig behindern, sehen erfindungsgemäße Verfahren vor, dass die Verschlussorgane von dem zumindest einen Längsantrieb zwischen der jeweiligen Schließstellung und einer jeweiligen Zwischenstellung bewegt werden können und zwischen der jeweiligen Zwischenstellung und jeweils einer maximalen Öffnungsstellung von zumindest einem Querantrieb bewegt werden können, wobei die Verschlussorgane in derjeweiligen Zwischenstellung vom jeweiligen Ventilsitz abgehoben aber noch in einem Bereich zwischen den Öffnungen angeordnet sind und in der jeweiligen maximalen Öffnungsstellung aus dem Bereich zwischen den Öffnungen, vorzugsweise vollständig, herausbewegt sind. Ventile, bei denen die Verschlussorgane solche Bewegungen durchführen, werden häufig auch als sogenannte L-Ventile bezeichnet. Die Bewegungsrichtung des Längsantriebs liegt günstigerweise entlang der Transportrichtung durch die Öffnungen hindurch. Die Bewegungsrichtungen des Querantriebs sind hierzu günstigerweise abgewinkelt, vorzugsweise orthogonal, angeordnet.

Bei erfindungsgemäßen Verfahren ist besonders bevorzugt vorgesehen, dass das dieser Öffnung zugeordnete Verschlussorgan durch den Überdruck beim Abheben von dem diese Öffnung umgebenden Ventilsitz von der Schließstellung in die Zwischenstellung gebracht wird. Dies reicht aus, um den Druckausgleich zwischen der dieser Öffnung zugeordneten Kammer und dem Ventilgehäuseinnenraum zu ermöglichen.

Günstigerweise sind die Verschlussorgane wie auch die Öffnungen einander gegenüberliegend angeordnet. Besonders bevorzugt ist es, wenn der zumindest eine Längsantrieb die Verschlussorgane aufeinander zu und voneinander weg bewegen kann. Besonders bevorzugt ist vorgesehen, dass die Verschlussorgane vom zumindest einen Längsantrieb oder den Längsantrieben unabhängig voneinander bewegt werden können. So ist es z. B. möglich, dass jedem Verschlussorgan ein eigener Längsantrieb zugeordnet ist. In diesem Fall ist es dann aber günstig, wenn die Längsantriebe an einem gemeinsamen Längsantriebsträger angeordnet sind. Dieser gemeinsame Längsantriebsträger kann zusammen mit den Längsantrieben dann z. B. vom Querantrieb bewegt werden. In diesem Falle ist den Längsantrieben somit ein gemeinsamer Querantrieb zugeordnet.

Weitere Merkmale und Einzelheiten bevorzugter Ausgestaltungsformen des erfindungsgemäßen Verfahrens werden anhand der nachfolgenden Figurenbeschreibung erläutert. Es zeigen:
- Fig. 1: eine schematische Darstellung zu zwei mittels eines Ventils verbundenen Kammern;
- Fig. 2 bis 5: schematisierte Detaildarstellungen zum in Fig. 1 verwendeten Ventil;
- Fig. 6: eine schematisierte Darstellung von mehreren in Reihe hintereinander angeordneten Kammern, welche jeweils mittels eines Ventils miteinander verbunden sind;
- Fig. 7: den Längsschnitt entlang der Schnittlinie A-A aus Fig. 6;
- Fig. 8: mehrere kreuzförmig angeordnete Kammern, welche mittels Ventilen und einer zentralen Transferkammer miteinander verbunden sind und
- Fig. 9: eine Schnittdarstellung zur Schnittlinie B-B aus Fig. 8.

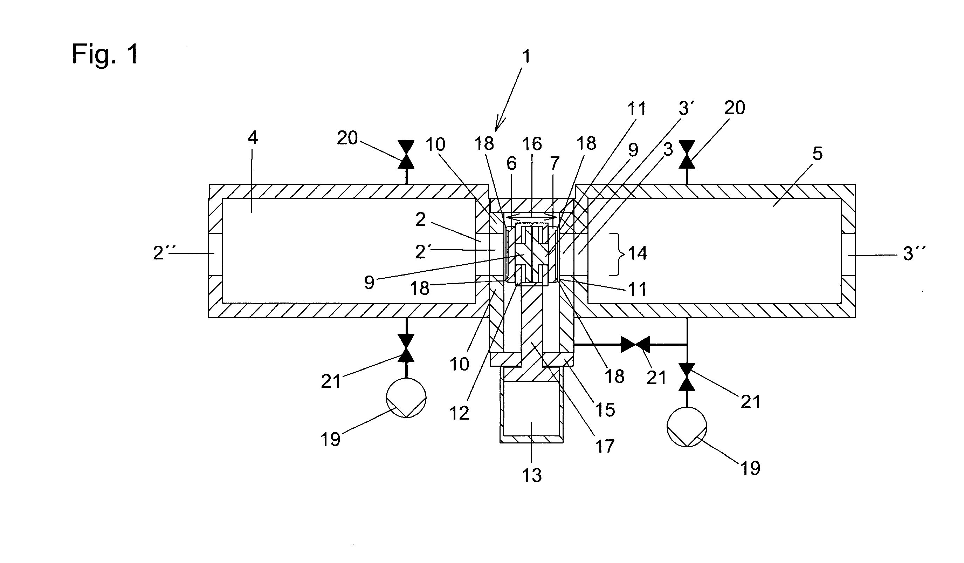

In Fig. 1 sind nun stark schematisiert zwei Kammern 4 und 5 dargestellt, welche mittels des Ventils 1 miteinander verbunden sind. Beide Kammern 4 und 5 weisen Öffnungen 2 und 3 auf. Das Ventil 1 dient dazu, die Kammern 4 und 5 bzw. die Kammervolumina 4 und 5 im geöffneten Zustand des Ventils 1 miteinander zu verbinden, sodass Bauteile, Werkstücke u. dgl. durch die Öffnungen 2 und 3 und den Ventilgehäuseinnenraum 8 hindurch von der Kammer 4 in die Kammer 5 oder umgekehrt gebracht werden können. Im Schließzustand sorgt das Ventil 1 dafür, dass die Öffnungen 2 und 3 einzeln oder beide verschlossen und abgedichtet sind. Für jede Öffnung 2 und 3 ist jeweils ein eigenes Verschlussorgan 6 und 7 vorgesehen. Die Verschlussorgane sind hier als Platten bzw. plattenförmig ausgebildet, um die ihnen jeweils zugeordnete Öffnung 2 und 3 zu verschließen oder freizugeben. Die Abdichtung erfolgt hier über die schematisch eingezeichneten Dichtungen 18, mit denen das jeweilige Verschlussorgan 6 und 7 am jeweiligen Ventilsitz 10 und 11 anliegt. Im hier gezeigten Ausführungsbeispiel ist der der Öffnung 2 der Kammer 4 zugeordnete Ventilsitz 10 am Ventilgehäuse 15 des Ventils 1 ausgebildet. Der der Öffnung 3 der Kammer 5 zugeordnete Ventilsitz 11 ist ebenfalls am Ventilgehäuse 15 angeordnet. Der Ventilsitz 10 umgibt die Öffnung 2' im Ventilgehäuse 15. Die Öffnung 2' ist in Deckung gebracht mit der Öffnung 2 der Kammer 4. Der Ventilsitz 11 umgibt die Öffnung 3' im Ventilgehäuse 15. Die Öffnung 3' ist in Deckung gebracht mit der Öffnung 3 der Kammer 5. Natürlich könnte der der Öffnung 2 zugeordnete Ventilsitz 10 auch direkt an der entsprechenden Wand der Kammer 4 ausgebildet sein und dann direkt die Öffnung 2 umgeben. Das Gleiche gilt für den Ventilsitz 11 und die Öffnung 3. Dieser Ventilsitz 11 könnte also auch direkt an der Wand der Kammer 5 ausgebildet sein und die Öffnung 3 umgeben.

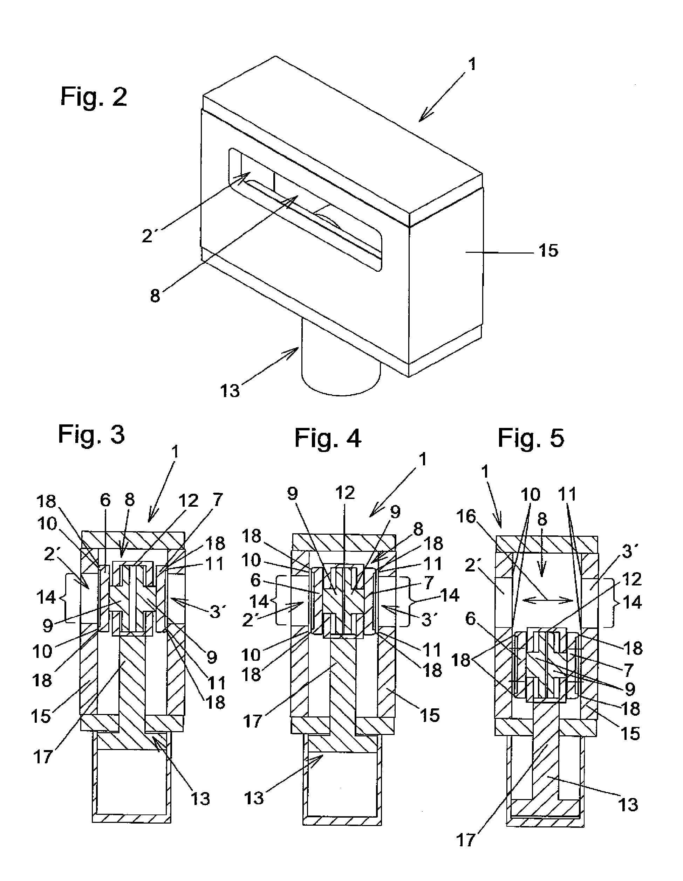

Die hier realisierten Längsantriebe 9 dienen dazu, die Verschlussorgane zwischen der Schließstellung und einer Zwischenstellung hin und her zu bewegen. Diese Bewegung erfolgt parallel zur Transportrichtung 16. Bei entsprechend weit geöffnetem Ventil 1 können Gegenstände und Gase in Richtung der Transportrichtung 16 durch den Ventilgehäuseinnenraum 8 hindurch von einer Kammer 4 oder 5 zur anderen Kammer 4 oder 5 transportiert werden. Die Längsantriebe 9 sind hier in einem gemeinsamen Längsantriebsträger 12 realisiert. Die Verschlussorgane 6 und 7 samt Längsantrieben 9 und Längsantriebsträger 12 werden bei diesem Ausführungsbeispiel von einem Querantrieb 13 in einer Richtung orthogonal zur Transportrichtung 16 zwischen der Zwischenstellung und der maximal geöffneten Stellung bewegt. Die Fig. 3, 4 und 5 zeigen Längsschnitte durch das Ventil 1, in denen die Längsantriebe 9 und der Querantrieb 13 zwar immer noch schematisiert aber doch genauer dargestellt sind. Wie dort zu erkennen, können sowohl die Längsantriebe 9 als auch die Querantriebe 13 als hydraulische oder pneumatische Kolbenzylinderanordnungen ausgebildet sein. Die Zu- und Ableitungen für die Hydraulik bzw. Pneumatik sind hier nicht eingezeichnet, können aber wie beim Stand der Technik ausgebildet sein. Der Querantrieb 13 greift hier in diesem Ausführungsbeispiel mittels der Stange 17 am Längsantriebsträger 12 an. Im Längsantriebsträger 12 ist für jedes der Verschlussorgane 6 und 7 jeweils ein Längsantrieb 9 realisiert. Mit dem Längsantrieb können die Verschlussorgane 6 und 7 im hier realisierten Ausführungsbeispiel unabhängig voneinander zwischen der in Fig. 3 dargestellten Schließstellung und der in Fig. 4 dargestellten Zwischenstellung hin und her bewegt werden. Diese Bewegungen erfolgen parallel zur Transportrichtung 16. In Fig. 5 ist die maximal geöffnete Stellung dargestellt, in der der Querantrieb 13 den Längsantriebsträger 12 und damit auch die Verschlussorgane 6 und 7 so weit aus dem Bereich 14 zwischen den Öffnungen 2 und 3 herausgefahren hat, dass dieser Bereich 14 vollständig geöffnet ist, und Bauteile oder zu bearbeitende Werkstücke problemlos durch die Öffnungen 2 und 3 und das Ventilgehäuse 15 und den Ventilgehäuseinnenraum 8 hindurch transportiert werden können. Nur der Vollständigkeit halber wird darauf hingewiesen, dass die Längsantriebe 9 und Querantriebe 13 natürlich auch anders, als hier dargestellt, realisiert werden können, z. B. als elektrische Antriebe, Spindeltriebe, Zahnradgetriebe, Zahnstangengetriebe u. dgl.. Fig. 2 zeigt eine perspektivische Darstellung auf das Ventil 1 ohne die Kammern 4 und 5.

Zu Fig. 1 wird der Vollständigkeit halber noch darauf hingewiesen, dass in dieser schematischen Darstellung die meist vorhandenen zusätzlichen Öffnungen 2" und 3", durch die hindurch zu bearbeitende Werkstücke oder andere Gegenstände in die Kammern 4 und 5 eingebracht oder aus diesen entnommen werden können, hier ohne entsprechende Ventile bzw. Verschlussmechanismen dargestellt sind. Die Öffnungen 2" und 3" können durch weitere Ventile 1 oder anders geartete, beim Stand der Technik bekannte, Verschlusseinrichtungen verschließbar sein. Der in allen Fig. hier gezeigte Aufbau kann grundsätzlich für verschiedenste Einsatzbereiche realisiert werden. Besonders bevorzugt werden solche Anordnungen aber in der Vakuumtechnik eingesetzt. Insbesondere in der Vakuumtechnik wird beiden Kammern 4 und 5, wie in Fig. 1 gezeigt, jeweils ein Belüftungsventil 20 zugeordnet. Öffnet man dies, so kann in der jeweiligen Kammer 4 und/oder 5 Atmosphärendruck eingestellt werden, indem Luft oder andere Gase mit Atmosphärendruck in die jeweilige Kammer 4 bzw. 5 einströmen. Im Normalbetrieb werden die Kammern 4 und 5 wie auch der Ventilgehäuseinnenraum 8 auf einem unter Atmosphärendruck liegenden Unterdruckniveau bzw. dem sogenannten Vakuum gehalten. Um dies einstellen zu können, sind im gezeigten Ausführungsbeispiel die Pumpen 19 vorgesehen. Bei entsprechend geschalteten Schaltventilen 21 kann mittels der Pumpen 19 Unterdruck in den Kammern 4 und 5 und auch im Ventilgehäuseinnenraum 8 erzeugt werden. Hierzu sind die Belüftungsventile 20 dann jeweils geschlossen. Im gezeigten Ausführungsbeispiel gemäß Fig. 1 wurde eine separate Pumpe 19 zum Abpumpen des Ventilgehäuseinnenraums 8 eingespart und der Ventilgehäuseinnenraum 8 über das Schaltventil 21 direkt mit der Pumpe 19, welche zum Abpumpen der Kammer 5 dient, verbunden. Durch entsprechendes Stellen der Schaltventile 21 können der Ventilgehäuseinnenraum 8 und die Kammer 5 gleichzeitig aber auch getrennt voneinander abgepumpt werden. Hierfür gibt es zahlreiche Alternativen. Es könnte z. B. dem Ventilgehäuseinnenraum 8 eine separate Pumpe 19 zugeordnet sein. Genauso gut könnte durch entsprechende Verbindung über ein entsprechendes Schaltventil 21 mit dem Ventilgehäuseinnenraum 8 auch die der Kammer 4 zugeordnete Pumpe 19 zum Abpumpen des Ventilgehäuseinnenraums 8 verwendet werden. Es könnte in Abweichung von Fig. 1 auch noch zusätzlich eine weitere Pumpe eingespart werden, indem man die drei Schaltventile 21 an eine einzige der beiden Pumpen 19 anschließt.

Nachdem nun der Aufbau der hier beispielartig gezeigten Anordnung aus zwei Kammern 4 und 5 und einem dazwischen angeordneten Ventil 1 anhand der Fig. 1 bis 5 erläutert wurde, wird anschließend nun basierend auf dieser Anordnung beispielhaft das erfindungsgemäßen Verfahren zum Betrieb des Ventils erläutert. Ausgegangen wird dabei von einem Schließzustand gemäß Fig. 3, in dem beide Verschlussorgane 6 und 7 die jeweilige Öffnung 2 und 3 der Kammern 4 und 5 abdichten. Das Abdichten kann z. B. erzeugt werden, indem die Verschlussorgane 6 und 7 von den Längsantrieben 9 entsprechend fest an die Ventilsitze 10 und 11 gedrückt werden. Alternativ und zusätzlich kann das Abdichten durch Andrücken auch erfolgen, indem im Ventilgehäuseinnenraum 8 ein entsprechend höherer Druck als in den Kammern 4 und 5 vorherrscht. Dies kann über die Pumpen 19 und eine entsprechende Stellung der Schaltventile 21 erreicht werden. In der Vakuumtechnik ist dabei davon auszugehen, dass die diesen Ausgangszuständen in den Kammern 4 und 5 und im Ventilgehäuseinnenraum 8 vorherrschenden Drücke geringer als der außerhalb vorherrschende Atmosphärendruck sind. Die Öffnungen 2" und 3" werden auch als geschlossen und entsprechend abgedichtet angenommen.

Soll nun mit dem erfindungsgemäßen Verfahren z. B. ein Druckausgleich zwischen der Kammer 5 und dem Ventilgehäuseinnenraum 8 hergestellt und hierzu die Öffnung 3 der Kammer 5 zum Ventilgehäuseinnenraum 8 hin geöffnet werden, so wird durch Öffnen des Belüftungsventils 20 Überdruck in der Kammer 5 erzeugt. Hierdurch wird dann das Verschlussorgan 7 vom Ventilsitz 11 abgehoben, sobald der Überdruck in der Kammer 5 die Kräfte, welche vom Längsantrieb 9 und vom momentanen Druck im Ventilinnengehäuseraum 8 auf das Verschlussorgan 7 in Richtung hin zur Schließstellung ausgeübt werden, überwindet. Es kommt also durch den Überdruck in der Kammer 5 zu einem Öffnen des Verschlussorgans 7, wobei dieses bevorzugt in eine Zwischenstellung gebracht wird, in der das Verschlussorgan 7 noch in Deckung mit dem Bereich 14 der Öffnung 3 ist. In dieser Stellung kommt es dann zum Druckausgleich zwischen der Kammer 5 und dem Ventilgehäuseinnenraum 8. Bringt man in bevorzugten Ausgestaltungsformen den Überdruck in der Kammer 5 auf Atmosphärendruck, so kann auf diese Art und Weise auch im Ventilgehäuseinnenraum 8 Atmosphärendruck erzeugt werden. Dies kann z. B. dazu genutzt werden, um Reinigungs-, Wartungs- oder sonstige Servicearbeiten am Ventil 1 durchzuführen, bei denen das Ventil 1 für die entsprechenden Arbeiten geöffnet werden muss, nachdem der Ventilgehäuseinnenraum 8 über die Kammer 5 erfindungsgemäß auf Atmosphärendruck gebracht worden ist.

Während dieser erfindungsgemäßen Art des Abhebens des Verschlussorgans 7 vom Ventilsitz 11 mittels Überdruck in der Kammer 5 und des in Folge eintretenden Druckausgleichs zwischen der Kammer 5 und dem Ventilgehäuseinnenraum 8 kann das die andere Öffnung 2 der anderen Kammer 4 verschließende Verschlussorgan 6 am Ventilsitz 10 angedrückt bleiben. Das Andrücken erfolgt durch den Längsantrieb 9 und/oder durch den sich in Ventilgehäuseinnenraum 8 aufbauenden Druck.

Abweichend vom hier beispielhaft geschilderten Druckausgleich zwischen der Kammer 5 und dem Ventilgehäuseinnenraum 8 kann natürlich erfindungsgemäß auch in analoger Art und Weise ein Druckausgleich zwischen der Kammer 4 und dem Ventilgehäuseinnenraum 8 erreicht werden, indem das Verschlussorgan 6 entsprechend mittels Überdruck in der Kammer 4 vom Ventilsitz 10 abgehoben wird. Darüber hinaus kann der geschilderte Prozess natürlich auch auf ganz anderen Druckniveaus erfolgen. So muss der Überdruck natürlich nicht grundsätzlich gleich dem Atmosphärendruck sein. Der Überdruck kann auch über oder unter dem Atmosphärendruck liegen. Gegebenenfalls muss zum Aufbau eines entsprechenden Überdrucks in den Kammern 4 oder 5 eine entsprechende, hier nicht eingezeichnete, Pumpe eingesetzt werden.

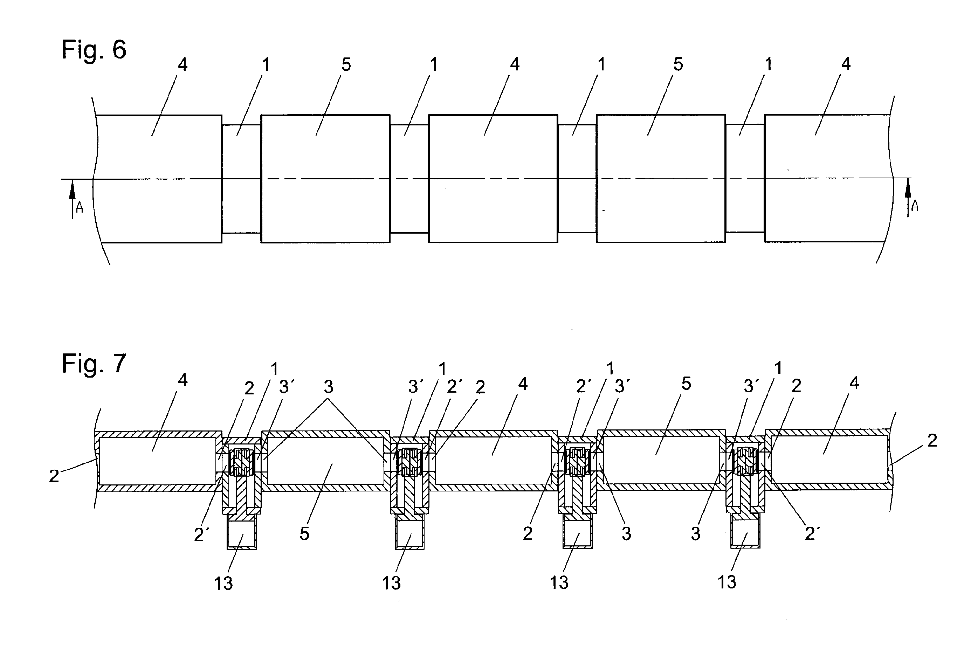

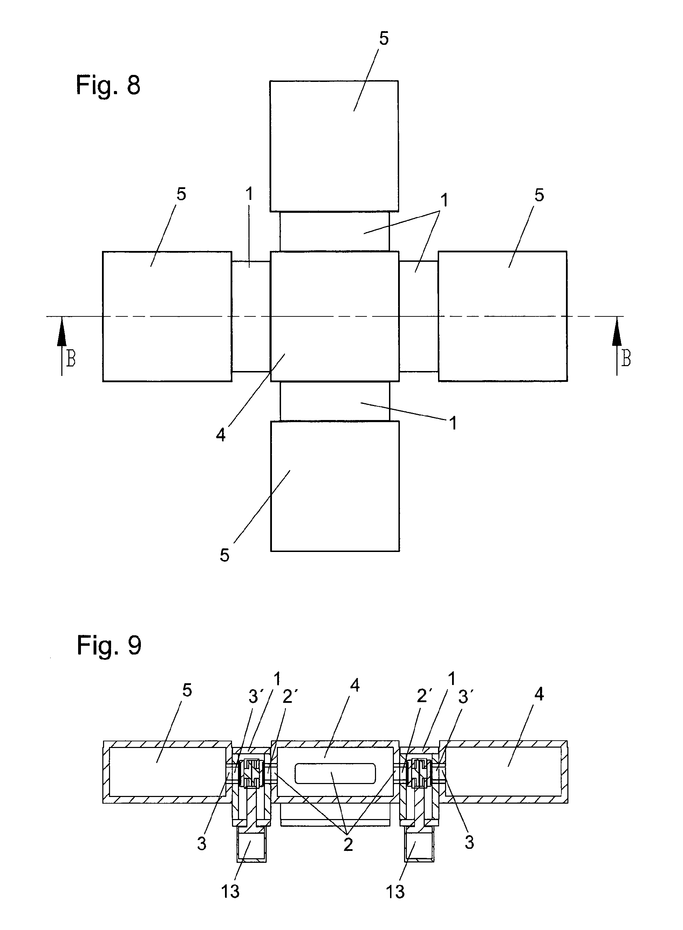

In Fig. 6 ist eine Reihe von hintereinander geschalteten Prozesskammern 4 und 5, welche jeweils über ein Ventil 1 verbunden sind, gezeigt. Die Ventile 1 entsprechen dem bisher geschilderten Ausführungsbeispiel gemäß der Fig. 1 bis 5. Fig. 7 zeigt einen Längsschnitt entlang der Schnittlinie A-A durch diese Aneinanderreihung von Ventilen und Kammern. Das erfindungsgemäße Verfahren kann bei jedem der Ventile 1 eingesetzt werden. Fig. 8 zeigt noch eine sternförmige Anordnung von Kammern 4 und 5. Auch diese sind mittels entsprechender Ventilen 1 der in Fig. 8 gezeigten Art und Weise miteinander verbunden. Fig. 9 zeigt den Schnitt entlang der Schnittlinie B-B. Auch die Ventile 1 in diesem Ausführungsbeispiel können in der erfindungsgemäßen Art und Weise betrieben werden.

Der Vollständigkeit halber wird abschließend darauf hingewiesen, dass in den Figuren 2 bis 9 die Pumpen 19, Belüftungsventile 20 und Schaltventile 21 nicht dargestellt sind. Dies ist eine rein zeichnerische Vereinfachung. Die in diesen Fig. nicht dargestellten Pumpen 19, Belüftungsventile 20 und Schaltventile 21 können wie in Fig.1 oder auch in anderer geeigneter Art und Weise realisiert werden.

### Legende

### zu den Hinweisziffern:

- 1: Ventil
- 2, 2', 2": Öffnung
- 3, 3', 3": Öffnung
- 4: Kammer
- 5: Kammer
- 6: Verschlussorgan
- 7: Verschlussorgan
- 8: Ventilgehäuseinnenraum
- 9: Längsantrieb
- 10: Ventilsitz
- 11: Ventilsitz
- 12: Längsantriebsträger
- 13: Querantrieb
- 14: Bereich
- 15: Ventilgehäuse
- 16: Transportrichtung
- 17: Stange
- 18: Dichtung
- 19: Pumpe
- 20: Belüftungsventil
- 21: Schaltventil

## Patentansprüche

1. Verfahren zum Betrieb eines Ventils (1), insbesondere Vakuumventils, welches Öffnungen (2, 3) von zumindest zwei Kammern (4, 5) miteinander verbindet und zum Verschließen der Öffnungen (2, 3) jeder der Kammern (4, 5) zumindest ein eigenes Verschlussorgan (6, 7) aufweist, wobei die Verschlussorgane (6, 7) zum Verschließen der Öffnungen (2, 3) in einer Schließstellung in einem Ventilgehäuseinnenraum (8) des Ventils (1) von zumindest einem Längsantrieb (9) des Ventils (1) an, den Öffnungen (2, 3) jeweils zugeordnete, Ventilsitze (10, 11) angedrückt werden, **dadurch gekennzeichnet, dass** zum Öffnen einer der Öffnungen (2, 3) in der dieser Öffnung (2, 3) zugeordneten Kammer (4, 5) ein Überdruck erzeugt wird, welcher höher als ein momentaner Druck im Ventilgehäuseinnenraum (8) ist, wobei durch diesen Überdruck das dieser Öffnung zugeordnete Verschlussorgan (6, 7) vom dieser Öffnung (2, 3) zugeordneten Ventilsitz (10, 11) abgehoben wird und dann durch diese Öffnung (2, 3) hindurch ein Druckausgleich zwischen der dieser Öffnung (2, 3) zugeordneten Kammer (4, 5) und dem Ventilgehäuseinnenraum (8) durchgeführt wird.

2. Verfahren nach Anspruch 1, **dadurch gekennzeichnet, dass** zum Abheben des dieser Öffnung (2, 3) zugeordneten Verschlussorgans (6, 7) vom dieser Öffnung (2, 3) zugeordneten Ventilsitz (10, 11) mit dem Überdruck Kräfte, welche vom Längsantrieb (9) und vom momentanen Druck im Ventilgehäuseinnenraum (8) auf das Verschlussorgan (6, 7) in Richtung hin zur Schließstellung ausgeübt werden, überwunden werden.

3. Verfahren nach Anspruch 1 oder 2, **dadurch gekennzeichnet, dass** während des Öffnens der einen der Öffnungen (2, 3) das die zumindest eine andere Öffnung (2, 3) der zumindest einen anderen Kammer (4, 5) verschließende Verschlussorgan (6, 7) vom Längsantrieb (9) und/oder vom sich im Ventilgehäuseinnenraum (8) aufbauenden Druck an den der anderen Öffnung (2, 3) zugeordneten Ventilsitz (10, 11) angedrückt wird.

4. Verfahren nach einem der Ansprüche 1 bis 3, **dadurch gekennzeichnet, dass** vor dem Erzeugen des Überdrucks in der dieser Öffnung (2, 3) zugeordneten Kammer (4, 5) und im Ventilgehäuseinnenraum (8) jeweils ein Druck herrscht, welcher kleiner als der Atmosphärendruck ist, und zur Erzeugung des Überdrucks in der dieser Öffnung (2, 3) zugeordneten Kammer (4, 5) Atmosphärendruck aufgebaut wird.

5. Verfahren nach einem der Ansprüche 1 bis 4, **dadurch gekennzeichnet, dass** der zumindest eine Längsantrieb (9) die Verschlussorgane (6, 7) aufeinander zu und voneinander weg bewegen kann.

6. Verfahren nach einem der Ansprüche 1 bis 5, **dadurch gekennzeichnet, dass** die Verschlussorgane (6, 7) vom zumindest einen Längsantrieb (9) unabhängig voneinander bewegt werden können.

7. Verfahren nach einem der Ansprüche 1 bis 6, **dadurch gekennzeichnet, dass** jedem der Verschlussorgane (6, 7) ein eigener Längsantrieb (9) des Ventils (1) zugeordnet ist, wobei vorzugsweise vorgesehen ist, dass die Längsantriebe (9) an einem gemeinsamen Längsantriebsträger (12) angeordnet sind.

8. Verfahren nach einem der Ansprüche 1 bis 7, **dadurch gekennzeichnet, dass** die Verschlussorgane (6, 7) von dem zumindest einen Längsantrieb (9) zwischen der jeweiligen Schließstellung und zumindest einer jeweiligen Zwischenstellung bewegt werden können und zwischen der jeweiligen Zwischenstellung und jeweils einer maximalen Öffnungsstellung von zumindest einem Querantrieb (13) bewegt werden können, wobei die Verschlussorgane (6, 7) in der jeweiligen Zwischenstellung vom jeweiligen Ventilsitz (10, 11) abgehoben aber noch in einem Bereich (14) zwischen den Öffnungen (2, 3) angeordnet sind und in der jeweiligen maximalen Öffnungsstellung, vorzugsweise vollständig, außerhalb des Bereichs (14) zwischen den Öffnungen (2, 3) angeordnet werden.

9. Verfahren nach Anspruch 8, **dadurch gekennzeichnet, dass** das dieser Öffnung (2, 3) zugeordnete Verschlussorgan (6, 7) durch diesen Überdruck beim Abheben von dem dieser Öffnung (2, 3) zugeordneten Ventilsitz (10, 11) von der Schließstellung in die Zwischenstellung oder eine der Zwischenstellungen gebracht wird.

## Claims

1. Method for operating a valve (1), in particular a vacuum valve, which connects openings (2, 3) of at least two chambers (4, 5) to one another and, for closing the openings (2, 3) of each of the chambers (4, 5), has at least one dedicated closure member (6, 7), wherein the closure members (6, 7), for closing the openings (2, 3) in a closed position in a valve-housing interior (8) of the valve (1), are pressed, by at least one longitudinal drive (9) of the valve (1), against valve seats (10, 11), each assigned to the openings (2, 3), **characterised in that**, for opening one of the openings (2, 3), a positive pressure is generated in the chamber (4, 5) assigned to said opening (2, 3) which is higher than a current pressure in the valve-housing interior (8), raising, by said positive pressure, the closure member (6, 7) assigned to said opening up from the valve seat (10, 11) assigned to said opening (2, 3) and then, through said opening (2, 3), a pressure equalisation is carried out between the valve-housing interior (8) and the chamber (4, 5) assigned to said opening (2, 3).

2. Method according to claim 1, **characterised in that**, in order for the closure member (6, 7) assigned to said opening (2, 3) to be raised up from the valve seat (10, 11) assigned to said opening (2, 3), the positive pressure overcomes forces to which the closure member (6, 7) is subjected in the direction of the closed position by the longitudinal drive (9) and by the current pressure in the valve-housing interior (8).

3. Method according to claim 1 or 2, **characterised in that**, during the opening of one of the openings (2, 3), the closure member (6, 7) closing the at least one other opening (2, 3) of the at least one other chamber (4, 5) is pressed by the longitudinal drive (9) and/or by the pressure building up in the valve-housing interior (8), against the valve seat (10, 11) assigned to the other opening (2, 3).

4. Method according to one of claims 1 to 3, **characterised in that**, prior to the positive pressure being generated, a pressure prevailing in each case in the valve-housing interior (8) and in the chamber (4, 5) assigned to said opening (2, 3) is lower than atmospheric pressure and, for generating the positive pressure, atmospheric pressure is built up in the chamber (4, 5) assigned to said opening (2, 3).

5. Method according to one of claims 1 to 4, **characterised in that** the at least one longitudinal drive (9) can move the closure members (6, 7) towards one another and away from one another.

6. Method according to one of claims 1 to 5, **characterised in that** the closure members (6, 7) can be moved independently of one another by at least one longitudinal drive (9).

7. Method according to one of claims 1 to 6, **characterised in that** each of the closure members (6, 7) is assigned a dedicated longitudinal drive (9) of the valve (1), provision preferably being made for the longitudinal drives (9) to be arranged on a common longitudinal-drive carrier (12).

8. Method according to one of claims 1 to 7, **characterised in that** the closure members (6, 7) can be moved between the respective closed position and at least one respective intermediate position by the at least one longitudinal drive (9) and can be moved between the respective intermediate position and in each case a fully open position by at least one transverse drive (13), wherein the closure members (6, 7),
in the respective intermediate position (10, 11), are raised up from the respective valve seat (10, 11), but still arranged (14) in a region between the openings (2, 3) and, in the respective fully open position, are arranged, preferably in their entirety, outside of the region (14) between the openings (2, 3).

9. Method according to claim 8, **characterised in that** the closure member (6, 7) assigned to said opening (2, 3) is moved by said positive pressure, during the operation of being raised up from the valve seat (10, 11) assigned to said opening (2, 3), from the closed position into the intermediate position or one of the intermediate positions.

## Revendications

1. Procédé de gestion d'une soupape (1) notamment d'une soupape à vide reliant des ouvertures (2, 3) d'au moins deux chambres (4, 5) et comportant au moins un propre organe de fermeture (6, 7) pour fermer les ouvertures (2, 3) de chacune des chambres (4, 5),
les organes de fermeture (6, 7) étant poussés pour fermer les ouvertures (2, 3) dans une position de fermeture, dans le volume intérieur (8) du boitier de la soupape (1) par au moins un entrainement longitudinal (9) de la soupape (1), pour être pressé contre le siège de soupape (10, 11) associé respectivement aux ouvertures (2, 3),
**caractérisé en ce que**
pour ouvrir l'une des ouvertures (2, 3) dans l'une des chambres (4, 5) associées à ces ouvertures (2, 3), on génère une surpression supérieure à la pression instantanée régnant dans le volume intérieur (8) du boitier de soupape,
et par cette surpression, on soulève l'organe de fermeture (6, 7) associé à cette ouverture par rapport au siège de soupape (10, 11) associé à cette ouverture (2, 3) et ensuite par cette ouverture (2, 3), on équilibre les pressions entre les chambres (4, 5) associées aux ouvertures (2, 3) et on l'applique au volume intérieur (8) du boitier de soupape.

2. Procédé de revendication selon la revendication 1,
**caractérisé en ce que**
pour soulever l'organe de fermeture (6, 7) associé à cette ouverture (2, 3) par rapport au siège de soupape (10, 11) associé à cette ouverture (2, 3), on dépasse les efforts générés par la surpression à l'aide de l'entrainement longitudinal (9) et par la pression instantanée régnant dans le volume intérieur (8) du boitier de soupape, s'exerçant sur l'organe de fermeture (6, 7) en direction de la position de fermeture.

3. Procédé de revendication selon la revendication 1 ou 2,
**caractérisé en ce que**
pendant le mouvement d'ouverture de l'une des ouvertures (2, 3), l'autre organe de fermeture (6, 7) associé à l'autre ouverture (2, 3) et fermant l'autre chambre (4, 5) est pressé par l'entrainement longitudinal (9) et/ou par la pression qui s'établit dans le volume intérieur (8) du boitier de soupape contre le siège de soupape (10, 11) associé à cette autre ouverture (2, 3).

4. Procédé de revendication selon l'une des revendications 1 à 3,
**caractérisé en ce qu'**
avant de générer la surpression dans la chambre (4, 5) associée à cette ouverture (2, 3) et dans le volume intérieur (8) du boitier de soupape, il règne une pression inférieure à la pression atmosphérique et pour générer la surpression dans la chambre (4, 5), associée à cette ouverture (2, 3), on établit la pression atmosphérique.

5. Procédé de revendication selon l'une des revendications 1 à 4,
**caractérisé en ce que**
l'entrainement longitudinal (9) écarte les organes d'obturation (6, 7) l'un par rapport l'autre ou les rapproche l'un par rapport à l'autre.

6. Procédé de revendication selon l'une des revendications 1 à 5,
**caractérisé en ce que**
les organes d'obturation (6, 7) sont déplacés indépendamment l'un de l'autre par l'entrainement longitudinal (9).

7. Procédé de revendication selon l'une des revendications 1 à 6,
**caractérisé en ce qu'**
à chacun des organes d'obturation (6, 7) est associé son propre entrainement longitudinal (9) de la soupape (1) et de préférence les entrainements longitudinaux (9) sont sur un support commun (12).

8. Procédé de revendication selon l'une des revendications 1 à 7
**caractérisé en ce que**
les organes d'obturation (6, 7) sont déplacés par au moins un entrainement longitudinal (9) entre la position de fermeture respective et une position intermédiaire et à l'aide, d'au moins, un entrainement transversal (13), entre cette position intermédiaire et la position d'ouverture maximale respective,
- les organes d'obturation (6, 7) étant soulevés dans la position intermédiaire respective par rapport au siège de soupape respectif (10, 11) tout en étant encore dans une zone (14) entre les ouvertures (2, 3) et dans la position d'ouverture maximale respective, ils sont, de préférence, complètement en dehors de la zone (14) entre les ouvertures (2, 3).

9. Procédé de revendication selon la revendication 8
**caractérisé en ce que**
l'organe d'obturation (6, 7) associé à cette ouverture (2, 3) est mis dans la position intermédiaire ou dans l'une des positions intermédiaires par le soulèvement à partir du siège de soupape (10, 11) associé à cette ouverture (2, 3) à partir de la position de fermeture.
